# EUROPEAN PATENT SPECIFICATION

(11) **EP 3 343 029 B1**
(45) Date of publication and mention of the grant of the patent: **01.12.2021**
(21) Application number: 17210754.2
(22) Date of filing: 27.12.2017
(51) Int. Cl.: F03D 17/00, F03D 7/02

(54) **ERROR MODE MANAGEMENT OF PITCH DRIVES FOR A WIND TURBINE**
FEHLERMODUSVERWALTUNG FÜR BLATTWINKELANTRIEBE FÜR EINE WINDTURBINE
GESTION DE MODE D'ERREUR DE MOTEURS À PAS VARIABLE D'UNE ÉOLIENNE

(30) Priority: 23.12.2016 GB 201622211
(43) Date of publication of application: 04.07.2018
(73) Proprietor: KEBA Industrial Automation Germany GmbH, 35633 Lahnau (DE)
(72) Inventor: WIESENTHAL, Thomas, 59759 Arnsberg (DE); THEOPOLD, Tobias, 44263 Dortmund (DE)
(74) Representative: Keil & Schaafhausen Patentanwälte PartGmbB

(56) References cited:
- US-A1- 2011 148 112
- US-A1- 2012 219 421
- US-A1- 2014 028 025
- TOBIAS ROSMANN ET AL: "Analysis of instability of direct powered DC-compound machines in pitch systems of large wind turbines", INDUSTRIAL TECHNOLOGY (ICIT), 2010 IEEE INTERNATIONAL CONFERENCE ON, IEEE, PISCATAWAY, NJ, USA, 14 March 2010 (2010-03-14), pages 323-329, XP031681147, ISBN: 978-1-4244-5695-6

## Description

The present invention relates generally to the control of pitch drives for wind turbines in error situations, and in particular to a pitch drive according to the preamble of claim 1, a wind turbine comprising such a pitch drive and a method for operating a pitch drive unit according to the preamble of claim 11.

### BACKGROUND OF THE INVENTION

Wind turbines, for example, are used for the conversion of kinetic energy into electrical energy. A wind turbine basically comprises a rotor, including a rotatable hub, at least one rotor blade, a nacelle, which accommodates an electric generator and often a gearbox. The nacelle is rotatable mounted on a tower, so that depending on the direction of the wind, the nacelle can be rotated into the wind, such that the at least one rotor blade directly faces the wind. At present the dominating design of a wind turbine has three rotor blades. Especially in high-power wind turbines, each rotor blade includes a pitch adjustment mechanism configured to rotate each rotor blade about its pitch axis. By rotating the rotor blades about their pitch axis, the lift produced by the wind streaming around the blades and thus the rotational speed of the hub can be controlled.

The control of a wind turbine is quite complex so that usually a controller for controlling the wind turbine is software controlled. The power acting on a wind turbine is considerably high, so that a wrong command not only could destroy the wind turbine but also is a thread to health and life of a person working at or in the wind turbine or even to neighbours or casual bystanders, in the event the wind turbine disintegrates.

US 2014/028025 A1 a device for adjusting the pitch position of a rotor blade of a wind turbine. The adjusting device comprises an adjusting motor, a converter for supplying a current and/or a voltage to the adjusting motor, and a control unit for controlling and/or regulating the converter. The rotation of the motor blade is monitored with a first and a second resolver. The first resolver is monitoring the rotation of the adjusting motor. The second resolver is generating a signal depending on the blade position. Both resolvers are connected to the control unit, and their signals are used to position the rotor blade. The control unit of the converter compares the signals of the two resolvers for checking the plausibility of the signals. When one of the resolvers fails, the control unit can switch to the second resolver in order to maintain the function of the adjusting device. In an event of failure of the control unit itself or of both resolvers at the same time, the adjusting device is provided with an emergency shutdown.

US 2011/148112 A1 discloses a control system for controlling operation of a wind turbine comprising a first and a second sensor device, each being arranged for measuring the same control parameter used for controlling operation of the wind turbine. The system further comprises a third sensor device for detecting an operating failure condition of first sensor device and/or the second sensor device. For obtaining a redundant system, the control system is adapted is adapted to select between controlling operation of the wind turbine on the basis of the control parameters measured by the first sensor device or on the basis of the control parameters of the second sensor device, based on measurements performed by means of the third sensor device.

US 2012/219421 A1 relates to a control system for a wind turbine comprising an electrical device used during operation of the wind turbine and a power source used as an emergency power supply backup connected to each pitch motor in order to achieve an emergency braking and stop. As a testing process for the emergency power supply backup, it is proposed to connect the pitch motor in regular intervals to the power source for monitoring the behavior of the power source.

Rossmann et.al., "Analysis of instability of direct powered DC-compound machines in pitch systems of large wind turbines", INDUSTRIAL TECHNOLOGY ICIT, 2010 IEEE PISCATAWAY, NJ, USA 13.03.2010, pages 323.329, ISBN: 978-1-4244-5695-6, describes a pitch system of a wind turbine limiting the turbine power during strong wind conditions and breaking the turbine via pitching the blades into the feathering condition. As the second task is safety critical, the pitch system is equipped with a backup storage. The pitch system comprises a pitch motor with a resolver and an encoder.

It is an object of the invention to increase the safety, especially the functional safety of a wind turbine. Functional safety of a system is defined that the system is operating correctly in response to its inputs, including the safe management of likely operator errors, hardware failures and environmental changes.

This object is achieved by a pitch drive for a wind turbine with the features of claim 1, the wind turbine having at least one rotor blade and the pitch drive comprising a pitch drive controller which analyses the pitch drive of the wind turbine if a first error situation, a second error situation and/or a third error situation occurs. The pitch drive controller is adapted to react to error situations with error procedures, including to react:
- to the first error in absence of a second error with a first error procedure
- to a second error in absence of the first error with a second error procedure
- to an error situation where the first error and the second error occur at the same time with a third error procedure that is different to the first error procedure and to the second error procedure.

The occurrence of a first error is equivalent to a first error situation; the occurrence of a second error is equivalent to a second error situation; and the cumulative occurrence of the first error and the second error at the same time, or within a short period of time, is equivalent to a third error situation. Performing a first error procedure is equivalent that the pitch drive is in a first error mode and adequate measures being assigned to that first error mode. Performing a second error procedure is equivalent that the pitch drive is in a second error mode and adequate measures being assigned to that second error mode. Performing a third error procedure is equivalent that the pitch drive is in a third error mode, and adequate measures being assigned to that third error mode. This enables the pitch drive to react in an adequate manner to the severity of an error situation. First error and second error, in case they occur separately may not necessarily need the same reaction if first error and second error occur simultaneously, including the occurrence of one error after the other error.

In the invention the first error situation is a failure of a resolver for controlling a pitch motor of the pitch drive and the second error situation is a failure of a blade encoder for measuring the position of the rotor blade of the same pitch drive. The error procedure in case a failure of the resolver and the blade encoder occurs at substantially the same time for the same pitch drive comprises at least one of interrupting the power supply to the pitch motor, blocking the control signals for that pitch motor, engaging a brake to block the movement of that rotor blade, requesting all other pitch drives to attain a neutral position.

In another aspect of the invention once an error situation has been detected, this error situation is uphold despite the error may have disappeared. This will avoid the situation that an error occurred and is mitigated by the error procedure so that the error disappears, but will occur again once the pitch drive motor has reverted to operate in normal conditions. This increases the safety of the wind turbine as it avoids that the wind turbine encounters the same error situation shortly after again, in which case the damage may be even worse.

In another aspect of the invention a reaction to an error situation that is characterised by a failure of a resolver occurs, the pitch drive motor is switched to self-sensing mode in which it controls its speed by sensing its own current supply.

In another aspect of the invention wherein the error situation is characterised by a failure of a blade encoder, the position of the rotor blade is calculated based on data received from the resolver for the same pitch drive.

In another aspect of the invention wherein the error situation is a failure of the emergency power backup system, the reaction to the error situation is to turn the rotor blade into a neutral position.

In another aspect of the invention is that the controller is adapted to apply predefined limitations to the pitch drive, such as speed limits or acceleration limits as a function of the actual error situation. This allows to react differently to different error situations and to drive the rotor blades as quickly as possibly under the given error situation. This avoids overreactions. In some cases it may be cautious to limit the speed, which may take longer to leave a certain error situation, but it may enable the pitch drive to complete its action, without risking to break down during the performed action.

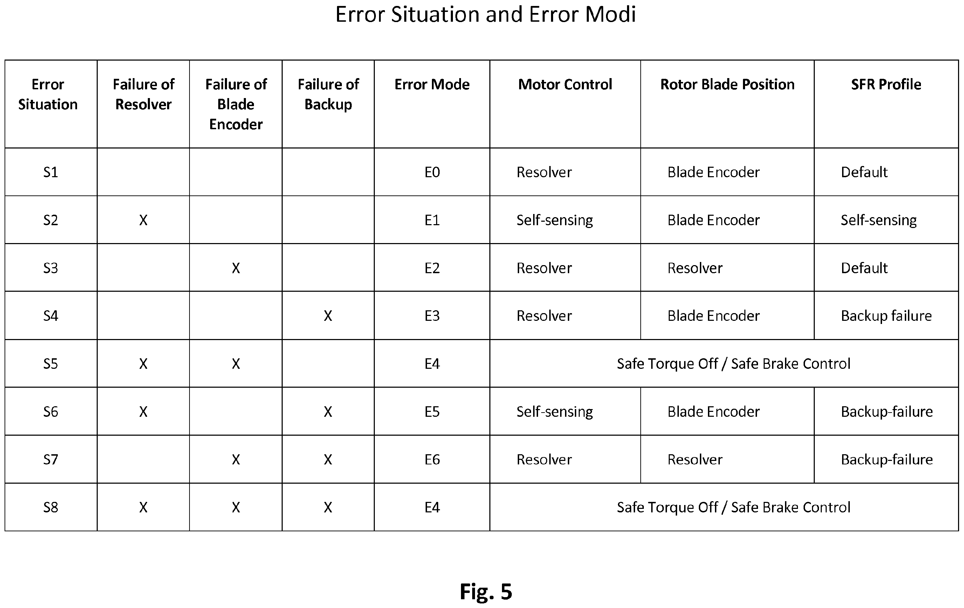

In the invention with a first error situation which is a failure of the resolver, a second error situation which is a failure of the blade encoder and a third error situation which is a failure of the emergency power backup system, adequate actions are performed as shown in Fig. 5.

### BRIEF DESCRIPTION OF THE DRAWINGS

A full and enabling disclosure of the present invention is set forth in the specification, which makes reference to the appended figures in which:
- Fig. 1: shows a wind turbine;
- Fig. 2: shows a control system for a wind turbine;
- Fig. 3: shows a block circuit diagram of a pitch system controller.
- Fig. 4: shows a block circuit diagram of a pitch drive controller.

- Fig. 5: shows different error modes of a pitch drive.
- Fig. 6: shows valid transitions from one error mode to another error mode.

### DETAILED DESCRIPTION OF THE INVENTION

Reference will now be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations that come within the scope of the appended claims.

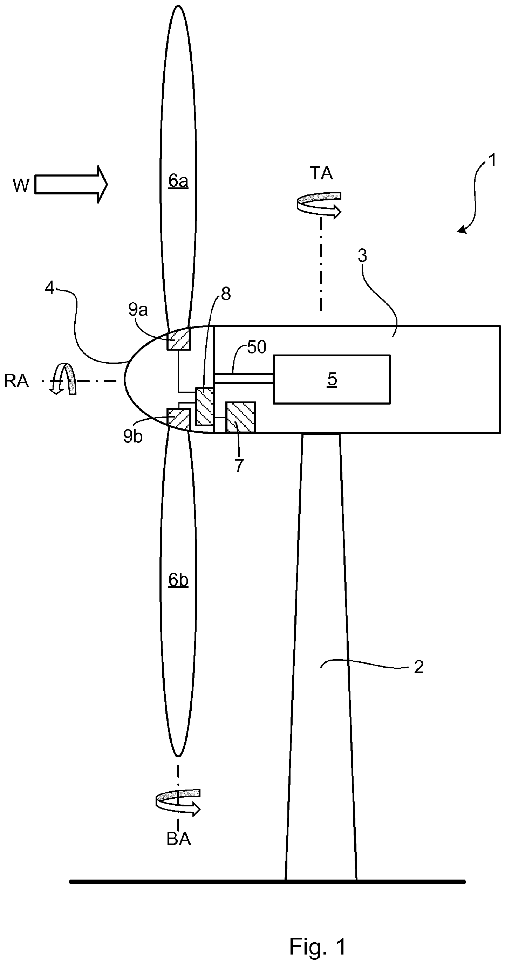

Figure 1 shows an embodiment of a wind turbine 1 according to the invention from a side view. The wind turbine 1 with pitch control comprises several components. A tower 2 which supports the other component of the wind turbine is fixed to the ground. Of course, the invention is not limited to on-shore installations but could also be used in connection with so-called off-shore installations where the tower is fixed to a structure in the sea. On top of the tower 2 a nacelle 3 is rotatable mounted such that the nacelle 3 rotates around the axis TA of the tower 2. The nacelle 3 comprises a hub 4 and at least one rotor blade 6a which is rotatable fixed to the hub 4 The wind turbine depicted in Figure 1 comprises three rotor blades 6a, 6b whereby only two rotor blades 6a, 6b are visible. The third rotor blade is not visible as it happens to be concealed by the hub. Hub 4 and rotor blades 6a, 6b, 6c are referred to also as the rotor of the wind turbine.

Each rotor blade 6a, 6b is mounted to a pitch drive unit 9a, 9b. As the wind turbine 1 in this example has three rotor blades 6a, 6b, there are three pitch drive units 9a, 9b, 9c (not shown in Fig. 1), one for each rotor blade 6a, 6b. The three pitch drive units 9a, 9b, 9c are controlled by a pitch system controller 8. Each pitch drive unit 9a, 9b, 9c turns each rotor blade 6a, 6b around a rotor blade axis BA. By turning the rotor blades 6a, 6b around their axis BA the angle of attack of the rotor blades 6a, 6b to the wind W can be set to an angle between 0° and 90°, in some installations even negative angles or angles greater than 90° are known. The angle of attack may be chosen thus that the blades 6a, 6b produce no lift, produce maximum lift, or any desired lift in between these two extremes in response to a wind force W.

In Figure 1 the nacelle 3 is pivoted around its axis TA such that the rotor 4 is facing wind W. In case the rotor blades 6a, 6b are pitched such that the wind W generates lift on the rotor blades 6a, 6b, the lift will force the rotor 4 to spin around a rotor axis RA. An electric current generator 5 coupled by a generator shaft 50 to the rotor 4 produces electric energy which may be fed into an energy distributing net (not shown). The pitch angle of the rotor blades 6a, 6b eventually controls the rotation speed of the rotor 4 and thus also the amount of produced energy.

In one aspect of a wind turbine the pitch system controller 8 and the three pitch drive units 9a, 9b, 9c constitute a pitch control sub system 8, 9a, 9b, 9c which controls the pitch angle of the rotor blades 6a, 6b independently from other sub systems of the wind turbine 1. A wind turbine 1 may consist of several sub systems, for example another subsystem (not shown) for controlling the rotation of the nacelle 3 around the vertical axis TA and another subsystem comprising the current generator 5 for generating electric power. Each sub system may be supplied by a different manufacturer, respectively subcontractor and may be centrally controlled by the wind turbine control unit 7.

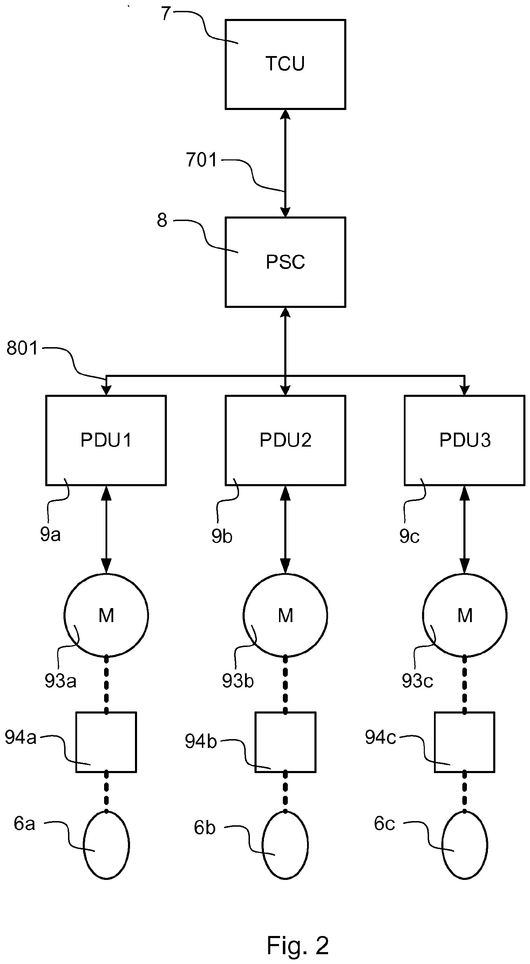

Figure 2 shows as a functional overview a pitch control sub system 8, 9a, 9b, 9c of a prior art wind turbine 1 interacting witch the wind turbine control unit 7. The pitch control sub system 8, 9a, 9b, 9c is powered by a power supply (not shown) which is connected to a power grid (not shown). In case of a power failure of the power grid or the power supply, a backup power supply (not shown) will supply, for a short time, the pitch control sub system 8, 9a, 9b, 9c with emergency power. Depending on the design one central backup power supply may be connected to the pitch system controler 8, or individual backup power supplies may be assigned to each pitch drive unit 9a, 9b, 9c. Another design variation is to connect a backup power supply to the pitch system controler 8 or the pitch drive units 9a, 9b, 9c, respectively, only if a power failure occurs. Alternatively, the backup power supplies may be connected permanently to the pitch drive units 9a. 9b, 9c. When the backup power supply is connected permanently to the pitch drive units 9a, 9b, 9c the backup power supply acts as a current buffer. In such an application the power supply needs to provide only the current for average power consumption of the pitch drive units 9a, 9b, 9c. The permanently connected back up power supply enables the pitch drive units 9a, 9b, 9c to consume more power in case the pitch drive units 9a, 9b, 9c are commanded to run at maximum speed and/or maximum torque. Each pitch drive unit 9a, 9b, 9c may be named as pitch drive (for each a blade 6a, 6b, 6c).

The wind turbine control unit 7 controls via a data connection 701 a pitch system control module 8. This data connection 701 is for example a field bus. The pitch system controller 8 in turn controls via a data connection 801 three pitch drive controller 9, i.e. each of the pitch drive control units 9a, 9b, 9c. This data connection 801 is for example another field bus. The field buses may for example also be a single field bus that is used in common by all control equipment. Each pitch drive control unit 9a, 9b, 9c eventually controls a pitch motor 93a, 93b, 93c. Each motor is coupled, for example via gears 94a, 94b, 94c to the first, second, and third rotor blade 6a, 6b, 6c. The motors turn (pitch) the rotor blades to a specific angle, for example as commanded by the wind turbine controller 7.

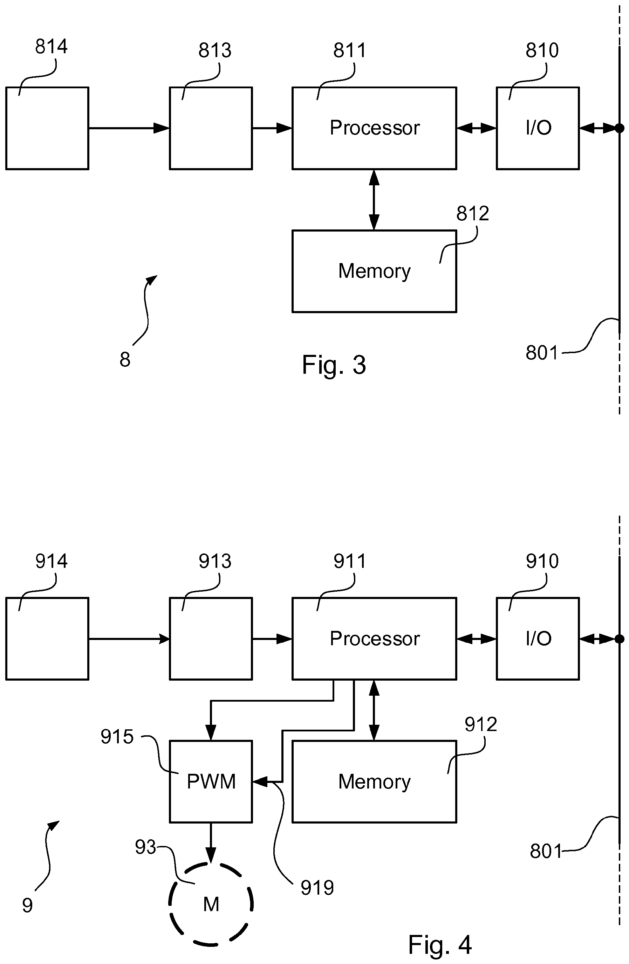

Figure 3 shows illustrated as a block diagram an embodiment of a pitch system controller 8 and components it may comprise. The pitch system controller 8 may comprise one or more processors 811 and associated memory devices 812 configured to perform a variety of computer-implemented functions such as performing the method steps, calculations and the like and storing relevant data as disclosed herein. The pitch system controller 8 may be implemented as one or more printed card boards which are plugged into a pitch system controller card board carrier back plane (not shown). For communicating with various sensors 814, a sensor interface 813 permits signals transmitted from sensors 814 to be converted into signals that can be understood and processed by the processor 811. The sensors 814 may be coupled to the sensor interface 813 via a wired connection, which for example are electrically connected to the said pitch system controller card board carrier back plane. In other embodiments they may be coupled to the sensor interface via a wireless connection.

The pitch system controller 8 also comprises a field bus interface 810 for communicating on the field bus 801 with the pitch drive controller 9. Via the field bus 801 further sensor data or other data from other parts of the wind turbine 1 can be received. Via this field bus 801, the pitch system controller 8 may be able to read the power that is generated by the electric generator in the nacelle 3. In this embodiment, the field bus 801 is also used to send and receive commands and data from three pitch drive control units 9a, 9d, 9c which individually control the pitch angle of each rotor blade 6a, 6b, 6c.

Figure 4 shows illustrated as a block diagram one embodiment of components that may be included within the pitch drive controller 9. The pitch drive controller 9 comprises one or more processors 911 and associated memory devices 912 configured to perform a variety of computer-implemented functions such as performing the method steps, calculations and the like and storing relevant data as disclosed herein. The pitch drive controller 9 may be implemented as one or more printed card boards which are plugged into a pitch drive unit card board carrier back plane (not shown). For communicating with various sensors 914, a sensor interface 913 permits signals transmitted from sensors 914 to be converted into signals that can be understood and processed by the processor 911. The sensors 914 may be coupled to the sensor interface 913 via a wired connection which for example are electrically connected to the said pitch drive unit card board carrier back plane. In other embodiments they may be coupled to the sensor interface via a wireless connection.

The pitch drive controller 9 also comprises a field bus interface 910 for communicating on the field bus 801 with the pitch system controller 81. Via the field bus 801 further sensor data or other data from other parts of the wind turbine 1 can be received. The processor 911 of the pitch drive controller 9 is connected to a pulse width modulator circuit 915 to control the rotation of the electro mechanical pitch motor 93 (93a. 93b, 93c) for rotating the rotor blades 6a, 6b, 6c around their axis BA.

A safety control layer is implemented in each pitch drive controller 9, i.e. in each of the pitch drive units 93a, 93b, 93c as a software module. The pitch system controller 8 and the three pitch drive units 93a, 93b, 93c (pitch drive controller 9) are each running on processor systems developed according IEC 61508 and systematic capability greater safety integrity level SIL1. They are communicatively connected via the field bus 802 which also fulfils IEC 61508 and systematic capability greater safety integrity level SIL1. IEC 61508 is the international standard for electrical, electronic and programmable electronic safety related systems which sets out the requirements for ensuring that systems are designed, implemented, operated and maintained to provide a required safety integrity level (SIL).

In operation of the wind turbine one or multiple failures may occur. These failures or errors may occur separately, or cumulative, for example a first error has occurred and while the first error is still present a second error, which is different to the first error occurs independently, In the following, three basic errors that may occur in a pitch drive are described and three basic reactions to these errors are described. However, the person skilled in the art will appreciate that these errors are just examplatory and other errors may occur in addition to the described errors.

In some wind turbines the pitch motors use a first angle sensor mounted close to an electric motor, for example on the motor shaft. This first angle sensor must be resistant to the heat the electric motor may produce when actuated. The type of angle sensor typically used for this purpose is called a resolver. The most common type of resolver is the brushless transmitter resolver with two two-phase windings, fixed at right angles to each other on a resolver stator, producing a sine and cosine feedback current. The relative magnitudes of the two-phase voltages are measured and used to determine the angle of a resolver rotor relative to the stator. In case a resolver has a single pair of two-phase windings, the feedback signals repeat their waveforms upon one full revolution. Such resolvers typically have a resolution of about 0.1°.

Such resolvers are available with self-diagnostics, so that in case the resolver becomes defective an error signal is generated. The unreliability of a resolver sensor signal may be also checked with a plausibility test. In any case, when the pitch drive controller considers a resolver to be unreliable or defective this is named in the following a first error of the pitch drive, or if this is an isolated error, i.e. no other error is present, this is called a first error situation S2, as the error situation in which no error occurs is called no-error situation S1.

In wind turbines, AC motors were used for pitch drives in the past. However, the trend is to use brushless DC motors. The brushless DC motor is a synchronous electric motor with an electronically controlled commutation system. In a brushless DC motor permanent magnets form the rotor. In order to control the motor an electronic controller distributes the power stator windings such that a rotating magnet field is produced by the stator windings. By the feedback information provided by the resolver the position of the rotor is known and by this the position of the permanent magnets. With this knowledge the motor controller can generate the rotating magnetic field so that the electric motor rotates exactly at the desired speed and torque. If provided with the respective control program a brushless DC motors can be operated without the information from a position sensor, i.e. without the feedback of the resolver at the cost of accuracy. This operation mode is called in the following self-sensing mode. Self-sensing mode could be based on the detection of the Back Electro Magnetic Force (BEMF) induced by the movement of a permanent magnet rotor in front of stator winding. The self-sensing mode analyzes for example zero crossing of BEMF in order to synchronize phase commutations. For lower speeds, where BEMF is small in amplitude the magnetic asymmetry of the motor may be used instead. For example with interior permanent magnet synchronous motors (IPMSM), which are a subcategory of brushless motors, a current sensor may be used to measure a so-called injection current signal. From the injection current signal for example a Kalman filter is used to estimate the position of the rotor. Similarly, self-sensing modes are also available for brushed DC motors and synchronous AC motors.

However, in order to control the rotor blades accurately usually the pitch motors are operated with a resolver as a sensor for measuring the angle position of the motor shaft. In case of a failure of the resolver, the motor cannot be controlled accurately and in case of a blade encoder error the position of the rotor blade cannot be measured, risking that the pitch motor turns the rotor blade to the wrong position. To overcome such a situation the invention proposes in case a failure of the resolver is detected but no failure of the blade encoder is detected to switch according to one embodiment the motor into self-sensing mode, which in the terminology of the claims is part of a first error procedure, or if it is the only reaction to the error, is the first error procedure. Additionally, the maximum speed can be reduced, for example to half of the rotation speed in sensor mode, to account for the reduced torque in self-sensing mode. For example in an emergency situation the rotation speed of the rotor blade may be limited at 6° per second in sensor mode and reduced to 3° per second in self-sensing mode.

As the rotor blade is quite heavy and needs a high torque to be rotated usually a gear box (gear) is provided between motor and the tooth ring on which the rotor blade is mounted. Typically the gearbox and a toothed ring that is driven by the gearbox have a transmission ratio of 1:1000 to 1: 2000. Taking into account the transmission ratio of the gearbox the position of the rotor blade may be calculated from the resolver data. However, often a second angle decoder is provided at the vicinity of the rotor blade to measure the angle position of the rotor blade. For example in the feathering position the angle of the rotor blades are 90°. For a full angle of attack to the wind they are turned substantially into a 0° position. Common angle encoders used for this location have for example a resolution of sixteen bit for a full 360° turn, which results in a resolution of approximately 0.005°. Alternatively twelve or thirteen bit multi-turn encoders may be attached to an output of a gear, i.e. at the side of the gear where the rotor blades are attached to. A gear box with a ratio of 1:100 to 1: 200 increases the resolution of the angle measured at the input of the gear, i.e. the side of the gear where the motor is attached to, effectively up to 0.0002°. Due to their relatively low temperature range such high precision angle decoders cannot be used close to the electrical motor.

In case a blade encoder error is detected this is termed in this application a second error situation, if the blade encoder error occurs in isolated form, i.e. no other error is present. The invention proposes as a second error procedure to mitigate this second error situation according to one embodiment to use the resolver information of the pitch motor to calculate the position of the rotor blade. Due to backslash of the gearbox etc. this may not be as accurate as the information from the blade encoder, but it is sufficient to stop the rotor blade at approximately 90°, still avoiding that sufficient lift is produced by the blade to restart propelling the rotor of the wind turbine. As the blade encoder usually produces absolute values, the resolver in contrast hereto usually produces relative values, preferably the pitch drive controller at start-up uses the absolute position provided by the blade encoder to reference the resolver encoder and continuously calculates and compares the resolver position with the blade encoder position. In case of a detected blade encoder failure the device controller can use the continuously calculated position to switch seamlessly from resolver mode into self-sensing mode.

Several other sensors such as a voltage sensor in this embodiment are used as, for example, to measure the capacity of a back-up power supply. In case of a power failure of the generator or the power grid the backup power supply should power the pitch motors at least as long as they need to turn the rotor blades into the feathering position. In this example, the analysis of the resolver, the blade encoder, and the backup power supply are reduced to a simple binary decision "failure" or "no failure" of each analysed device.

In case a failure of the backup power supply is detected, this is termed in this application a third error. In case the third error occurs isolated, i.e. with no other error present this is termed a third error situation S4. In case of the occurrence of the third errors situation S4 the invention proposes in a fourth error procedure E3 to turn the other pitch drivers in the feathering position, which eventually will stop the rotor, even if one of the rotor blades is not able to turn to the feathering position. As an optional reaction the fourth error procedure may also limit the speed of the pitch motor to a second limited speed. This second speed limit takes into account that the backup power supply in this special embodiment is permanently connected to the power supply to support a high current that is required by the pitch motor when turning at high speed and/or high torque. In case of a failure of the backup power supply, this additional power is no longer commanding the pitch motor to turn at high speed and/or at a high torque may cause a breakdown of the power supply. In this case it is assumed that it is less risk to pitch the rotor blades at a reduced but constant speed rather than risking a complete halt during a feathering run. This second limited speed may be even lower than for self-sensing mode, for example 2° per second.

The abovementioned first error, second error and third error (situations) may occur in combinations with each other. Figure 5 shows in a table in a first column eight different error scenarios, or eight different error situations. This first column is labelled "Error situation" A second column is labeled "Failure of Resolver" and shows for each error situation the error status of the resolver, whereby a failure of the resolver is indicated by an "X" and a failure free functioning resolver is indicated by a blank cell. Similarly, a third column labelled "Failure of Blade Encoder" shows a failure of the blade encoder indicated also by an "X" and a failure free functioning of the blade encoder as a blank cell. A fourth column labelled "Failure backup" shows a failure of the backup system indicated by an "X" and a failure free functioning backup indicated by a blank cell.

As with three independent binary events there are eight different possible combinations of the error status of the resolver, the blade encoder, and the backup. These eight possible combinations are labelled in the first column S1 for the no-error situation, S2 for the first error situation, S3 for the second error situation, S4 for a third error situation, S5 for a fourth error situation, S6 for a fifth error situation, S7 for a sixth error situation, and S8 for an seventh error situation. In this embodiment the eight error situations S1, S2, S3, S4, S5, S6, S7, S8 are mapped to seven error modes, an error free mode E0, a first error mode E1, a second error mode E2, a third error mode E3, a fourth error mode E4, a fifth error mode E5, and a sixth error mode E6. In each error mode E0, E1, E2, E3, E4, E5, E6 the pitch drive uses a different failure mitigation strategy, e.g. a different error procedure, which is described in the sixth column labelled "Motor Control", the seventh column labelled "Rotor Blade Position" and the eight column labelled "SFR Profile". Although the fourth error situation S5 and the seventh error situation S8 differ in the failure status of the backup, they share the same error mode E4.

The first line after the column headings of the table of Figure 5 shows the first error situation S1 in which, as described above, the resolver, the blade encoder and the backup have been analysed to work properly, i.e. without any indication of a failure.

Consequently, the error mode that is assigned to this modus is called "error free" mode E0. The error free mode E0 is assigned to the no-error situation S1. In the error free mode E0, the output value of the blade encoder is used by the pitch drive controller to measure at any time the position of the rotor blade. Once the blade encoder transmits an angle of 90° to the pitch drive controller, the controller can rely on this input value and will stop rotating the rotor blade when it has reached the final position for the feathering position. As the resolver is assumed to work properly, the pitch drive controller controls the motor by using the high resolution data of the resolver. Also, as the back-up power supply does not indicate an error, the commands from the wind turbine control unit are transparently forwarded from the wind turbine control unit to the pitch drive controller. This is indicated in the table in the column SFR Profile (SFR stands for Safe Feathering Run) by the word "default" which means that the pitch drive controller does not apply any modifications to the speed of the motors.

The first error situation S2, as described above, is entered in case a failure of the resolver is detected, but no failure of the blade encoder and no failure of the backup have been detected. The first error mode E1 is assigned to this first error situation. This error mode has been discussed earlier above. As the blade encoder is not affected, the rotor blade position is measured by the blade encoder. The pitch motor, however, is switched from sensor mode, i.e. controlled by the resolver, into self-sensing mode. As explained above, the pitch motor speed in the self-sensing mode is limited to a first speed limit. The pitch drive controller, in this case, uses an SFR profile which is called "self-sensing". When the "self-sensing" profile is applied the pitch drive controller will modify the received commands so that when they are forwarded to the pitch drive controller, the speed of the pitch motor is limited to the first speed limit. The limiting of the rotation speed of the pitch motor is just one example. In an SFR profile, other limitations may be applied to the controller, such as maximum current respectively torque limits.

In case a failure of the blade encoder is detected, but resolver and backup are working error-free, this is classified in this embodiment, as described above, as the second error situation S2, to which the second error mode E2 is assigned. As already described above, in this second error mode, the rotor blade position is determined by using the resolver of the pitch motor. As the resolver is not affected, the pitch motor can operate in the usual sensor mode and the SFR profile can remain as the default profile. However, due to the less accurate determined rotor blade position, a profile especially designed for that purpose may be used.

In case the controller detects a failure of the power backup but resolver and blade encoder are indicating to work without errors this situation is classified as the third error situation S4 to which the fourth error mode E3 is assigned to. In the fourth error mode E3 a special "backup failure " profile is applied. As already described above, in the "backup failure" profile, the speed of the pitch drive is reduced to a second speed limit. However, other alternative or additional measures may be applied by the controller.

In case a failure of the resolver and a failure of the blade encoder is detected at the same time this is classified as the fourth error situation S5 to which the fourth error mode E4 is assigned. In the third error mode E4 the invention proposes to prevent any movement by the pitch motor, to engage the mechanical brake and to request the other pitch drives to turn their rotor blades into the feathering position. Usually in wind turbines with three rotor blades it would suffice to have two of the three rotor blades in feathering position to be able to force the wind turbine rotor to a halt. The preventing of any movement can be achieved by resetting any commands received by the controller to a command that sets the speed to zero, respectively a command that stops the motor. In addition, or alternatively, the controller may use additional circuitry to block the controls of the pitch motor, for example by interrupting by means of switches the power supply to a power inverter. Alternatively or in addition hereto all control inputs of the drive circuitry, for example the input lead of an H-bridge can be connected with zero voltage, so that independent whatever control signals are produced in the pitch drive controller, these control signals are short-circuited to a ground voltage and thus effectively overwritten. Especially the safety of pitch motors without specific safety precautions can be improved with additional circuitry that is controlled for example by control signals 919 of the pitch drive controller 9.

In case the controller detects the failure of the resolver and a failure of the backup power supply but no failure of the late encoder this situation is classified as the fifth error situation S6 to which the fifth error mode E5 is assigned to. In the fifth error mode E5, the rotor blade position is directly derived from the blade encoder as the blade encoder works without error. Due to the failure of the resolver, the motor control is set into self-sensing mode. Due to the failure of the backup power supply the SFR profile chosen by the controller is the "backup-failure" profile.

In case the controller detects the failure of the blade encoder and at the same time the failure of the backup, but the resolver is reported to work without failure, this situation is classified as the sixth error situation S7, to which the sixth error mode E6 is assigned to. In the sixth error mode E6 the motor control continues in resolver mode, whereas the rotor blade position is measured by the resolver. Due to the backup failure, the chosen SFR profile is the "backup-failure" profile.

Finally, when the controller faces a situation where there is a cumulative error of the resolver, the blade encoder, and the backup, the controller classifies this as the seventh error situation D8, to which the fourth error mode E4, is assigned to. As pointed out above the fourth error situation S5 and the seventh error situation S8 share the same error mode E4. The measures taken in this case are safe torque off and safe break control. As in the fourth error mode E4, the pitch motor is stopped at once, the SFR profile applied does not matter. Important is only that the controller is reporting the fourth mode error E4 to the other pitch drive units so that the other pitch drive units are commanded into a feathering run. Theoretically, however, the action "Safe Torque Off" may also be seen as a special SFR profile.

As can be seen from Figure 5, some error modes are not only a pure combination of the measures in case a single failure has occurred. For example, the reaction to a combination of a resolver failure and a blade encoder failure, which is safe torque off, is not equivalent to a combination of the first error mode E1 and the second error mode E2. Therefore, the three different types of errors of this embodiment are dealt with in different ways when a combination of errors occurs.

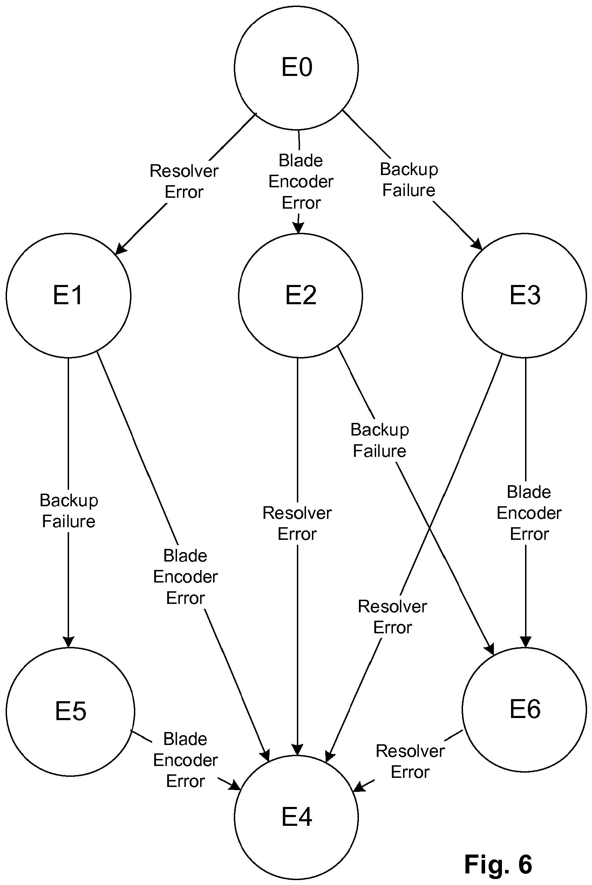

Figure 6 shows the transitions between the error free mode E0 and the first error mode E1, the second error mode E2, the fourth error mode E3, the third error mode E4, the fifth error mode E5, and the sixth error mode E6. An autonomous movement of the rotor blades into the feathering position does not necessarily mean that it was caused by an error. The autonomous movement can also be started intentionally by the user when he wants, for example, to stop the wind turbine for maintenance purposes. In this case, the wind turbine would be in the error free mode E0. To stop the wind turbine without the need of an immediate stop in this embodiment a command "Normal Stop " would be used which allows a kind of soft slowing down of the rotor of the wind turbine. This does not only result in little wear of the pitch drives but also a reduction of load for the structure of the wind turbine, such as bending forces on the tower. In "Normal Stop " mode a special profile may be used that slowly turns the rotor blades into the feathering position, for example by limiting the speed to 20% of the maximum speed allowed for the pitch drive units.

If no error occurs, the pitch drive stays in error-free mode E0 until it has reached the feathering position as planned. In error-free mode E0, as shown in Figure 6, three error conditions may arise. In case of a resolver error, the pitch drive is adapted to transit to error mode E1; in case of a blade encoder failure it will transit to error mode E2; and in case of a back-up failure it will transit to error mode E3. Even if two failures seem to appear at the same time, the deterministic system will process one of the two or more errors one after the other. In the first error mode E1, only two more errors will be evaluated. A blade encoder error will transit the first error mode E1 into third error mode E4 and a backup failure will transit the first error mode E1 into the fifth error mode E5. Similarly, from second error mode E2, a resolver error will transit the pitch drive into the third error mode E4 and a blade encoder error will transit the second error mode E2 into the sixth error mode E6. Similarly, a resolver error will transit the fourth error mode E3 into the third error mode E4 and in case of a backup failure, the pitch drive is transited to sixth error mode E6. In case of a blade encoder error, the fifth error mode E5 is transited into the third error mode E4 and in case of a resolver error, the sixth error mode E6 is transited into the third error mode E4. E4 is the ultimate error mode as it is only applicable when all three evaluated error conditions have occurred.

As once can see from the transition diagram of Figure 6, in case an error has occurred, there is no transition back to any of the previous error modes as it is too risky to trust a sensor that was reported faulty before. In this case, the pitch drive will have to continue in the once attained error mode until a technician has visited the wind turbine and has repaired the cause of the error and /or the error has been reset The described error modes therefore allow a very clear control of the pitch drive in an error situation. This very clear error handling improves as such the safety of the pitch drive and the wind turbine in total.

**Reference list**

| | |
|---|---|
| wind turbine | 1 |
| tower | 2 |
| nacelle | 3 |
| rotor | 4 |
| electric generator | 5 |
| generator shaft | 50 |
| first rotor blade | 6a |
| second rotor blade | 6b |
| third rotor blade | 6c |
| wind turbine control unit | 7 |
| first data connection | 701 |
| pitch control sub system | 8, 9a, 9b, 9c |
| pitch system controller | 8 |
| second data connection | 801 |
| third data connection | 802 |
| pitch system controller | 81 |
| interface | 810 |
| pitch system controller processor | 811 |
| pitch system controller memory | 812 |
| pitch system controller sensor interface | 813 |
| pitch system controller sensor | 814 |
| pitch drive controller | 9 |
| first pitch drive unit | 9a |
| second pitch drive unit | 9b |
| third pitch drive unit | 9c |
| pitch drive interface | 910 |
| pitch drive processor | 911 |
| pitch drive memory | 912 |
| pitch drive sensor interface | 913 |
| pitch drive sensor | 914 |
| pulse width modulator circuit | 915 |
| pitch motors, actuators | 93a, 93b, 93c |
| gears | 94a, 94b, 94c |

## Claims

1. A pitch drive for turning at least one rotor blade (6a, 6b, 6c) of a wind turbine (1), the pitch drive comprising a pitch drive controller (9) which analyses if a first error situation (S2) or a second error situation (S3) occurs in a pitch drive unit (9a, 9b, 9c) of the pitch drive controller (9) and wherein the pitch drive controller (9) is adapted to react:
- to the first error situation (S2) in absence of the second error situation (S3) and a third error situation (S4) with a first error procedure (E1), wherein the first error situation (S2) comprises a failure of a resolver for controlling a pitch motor (93a, 93b, 93c) of one of pitch drive units (9a, 9b, 9c);
- to the second error situation (S3) in absence of the first error situation (S2) and the third error situation (S4) with a second error procedure (E2);
- to a fourth error situation (S5) where the first error situation (S2) and the second error situation (S3) occur in absence of the third error situation (S4) at the same time with a third error procedure (E4) that is different to the first error procedure (E1) and the second error procedure (E2);
**characterized in**
**that** the second error situation (S3) comprises a failure of a blade encoder for measuring position of a rotor blade (6a, 6b, 6c) of the pitch drive unit (9a, 9b, 9c); and
**that** the pitch drive controller (9) is further adapted to react:
to the third error situation (S4) in absence of the first situation (S2) and the second error situation (S3), with a fourth error procedure (E3), wherein the third error situation (S4) comprises a failure of an emergency power backup system for the pitch drive;
- to an error situation (S8) where the first error situation (S2), the second error situation (S3) and the third error situation (S4) occur at the same time, with the third error procedure (E4);
- to an error situation (S6) where the first error situation (S2) and the third error situation (S4) occur in absence of the second error situation (S3) at the same time, with the first error procedure (E1) and the fourth error procedure (E3); and
- to an error situation (S7) where the second error situation (S3) and the third error situation (S4) occur in absence of the first error situation (S2) at the same time, with the second error procedure (E2) and the fourth error procedure (E3).

2. The pitch drive of claim 1 wherein the third error procedure (E4) comprises for the same pitch drive unit (9a, 9b, 9c) is at least one of interrupting the power supply to the pitch motor (93a, 93b, 93c), blocking the control signal for the pitch motor (93a, 93b, 93c), engaging a brake to block the movement of the rotor blade (6a, 6b, 6c), requesting at least a second pitch drive unit (93b, 93c, 93a) to attain a neutral position.

3. The pitch drive of claim 1 or 2 wherein once the pitch drive is in the error situation where the first error situation (S2) and the second error situation (S3) have occurred at the same time the error situation (S2, S3) is uphold despite the first error situation (S2) or the second error situation (S3) having disappeared.

4. The pitch drive of one of the preceding claims wherein the first error procedure comprises switching the pitch drive motor (93a, 93b, 93c) to a self-sensing mode in which the pitch drive unit (9a, 9b, 9c) controls its speed by sensing its own current supply.

5. The pitch drive of one of the preceding claims wherein the second error procedure (E2) comprises calculating a position of the first rotor blade (6a) based on data received from the resolver of the first pitch drive unit (9a).

6. The pitch of one of the preceding claims, wherein the fourth error procedure (E3) comprises turning the rotor blade (6a, 6b, 6c) into a neutral position.

7. The pitch drive of claim 6, wherein the fourth error procedure (3) comprises applying a limitation to the pitch drive of the wind turbine.

8. The pitch drive of claim 7, wherein applying the limitation comprises a speed limit or an acceleration limit.

9. The pitch of one of the preceding claims, wherein the pitch drive controller (9) is adapted, even if two error situations of the first, second and third error situations (S2, S3, S4) seem to appear at the same time, to process one of the two or more error situations (S2, S3, S4) one after the other.

10. A wind turbine (1) comprising at least one pitch drive according to one of the preceding claims.

11. A method for operating a pitch drive unit (93a, 93b, 93c) of a wind turbine (1) comprising:
- analyzing if a first error situation (S2) or a second error situation (S3) occurs in the pitch drive unit (93a, 93b, 93c) wherein the first error situation (S2) comprises a failure of a resolver for controlling a pitch motor (93a, 93b, 93c) of one of the pitch drive units (9a, 9b, 9c);
- reacting to the first error situation (S2) in absence of the second error situation (S3) with a first error procedure (E1);
- reacting to the second error situation (S3) in absence of the first error situation (S2) with a second error procedure (E2); and
- reacting to an error situation where the first error situation (S2) and the second error situation (S3) occur at the same time with a third error procedure (E4) that is different to the first error procedure and to the second error procedure.
**characterized in**
**that** the second error situation (S3) comprises a failure of a blade encoder for measuring position of a rotor blade (6a, 6b, 6c) of the pitch drive unit (9a, 9b, 9c); and
**that** said method further comprising:
to react to the third error situation (S4) in absence of the first situation (S2) and the second error situation (S3), with a fourth error procedure (E3), wherein the third error situation (S4) comprises a failure of an emergency power backup system for the pitch drive;
- to react to an error situation (S8) where the first error situation (S2), the second error situation (S3) and the third error situation (S4) occur at the same time, with the third error procedure (E4);
- to react to an error situation (S6) where the first error situation (S2) and the third error situation (S4) occur in absence of the second error situation (S3) at the same time, with the first error procedure (E1) and the fourth error procedure (E3); and
- to an error situation (S7) where the second error situation (S3) and the third error situation (S4) occur in absence of the first error situation (S2) at the same time, with the second error procedure (E2) and the fourth error procedure (E3).

12. The method of claim 11 wherein said method further comprising to react in the third error procedure (E4) by at least one of blocking the control signal for the first pitch motor (93a), engaging a brake to block the movement of the first rotor blade (6a), requesting at least a second pitch drive (93b) to attain a neutral position.

13. The method of claim 11 or 12 wherein one of two or more error situations of the first, second and third error situations (S2, S3, S4) are processed one after the other even if two or more error situations seem to appear at the same time.

## Patentansprüche

1. Blattwinkelantrieb zum Drehen von zumindest einem Rotorblatt (6a, 6b, 6c) einer Windturbine (1), wobei der Blattwinkelantrieb eine Blattwinkelantriebssteuerung (9) umfasst, die untersucht, ob eine erste Fehlersituation (S2) oder eine zweite Fehlersituation (S3) in einer Blattwinkelantriebseinheit (9a, 9b, 9c) der Blattwinkelantriebssteuerung (9) auftritt, und wobei die Blattwinkelantriebssteuerung (9) dazu geeignet ist, auf Folgendes zu reagieren:
- auf die erste Fehlersituation (S2) in Abwesenheit der zweiten Fehlersituation (S3) und einer dritten Fehlersituation (S4) mit einer ersten Fehlerprozedur (E1), wobei die erste Fehlersituation (S2) einen Ausfall eines Drehmelders zum Steuern eines Blattwinkelmotors (93a, 93b, 93c) von einer der Blattwinkelantriebseinheiten (9a, 9b, 9c) umfasst;
- auf die zweite Fehlersituation (S3) in Abwesenheit der ersten Fehlersituation (S2) und der dritten Fehlersituation (S4) mit einer zweiten Fehlerprozedur (E2);
- auf eine vierte Fehlersituation (S5), wobei die erste Fehlersituation (S2) und die zweite Fehlersituation (S3) in Abwesenheit der dritten Fehlersituation (S4) gleichzeitig auftreten, mit einer dritten Fehlerprozedur (E4), die sich von der ersten Fehlerprozedur (E1) und der zweiten Fehlerprozedur (E2) unterscheidet;
**dadurch gekennzeichnet,**
**dass** die zweite Fehlersituation (S3) einen Ausfall eines Blattmessgebers zum Messen einer Position eines Rotorblatts (6a, 6b, 6c) der Blattwinkelantriebseinheit (9a, 9b, 9c) umfasst; und
**dass** die Blattwinkelantriebssteuerung (9) ferner dazu geeignet ist, auf Folgendes zu reagieren:
- auf die dritte Fehlersituation (S4) in Abwesenheit der ersten Fehlersituation (S2) und der zweiten Fehlersituation (S3) mit einer vierten Fehlerprozedur (E3), wobei die dritte Fehlersituation (S4) einen Ausfall eines Notfall-Reservestromversorgungssystems für den Blattwinkelantrieb umfasst;
- auf eine Fehlersituation (S8), in der die erste Fehlersituation (S2), die zweite Fehlersituation (S3) und die dritte Fehlersituation (S4) gleichzeitig auftreten, mit der dritten Fehlerprozedur (E4) ;
- auf eine Fehlersituation (S6), in der die erste Fehlersituation (S2) und die dritte Fehlersituation (S4) in Abwesenheit der zweiten Fehlersituation (S3) gleichzeitig auftreten, mit der ersten Fehlerprozedur (E1) und der vierten Fehlerprozedur (E3); und
- auf eine Fehlersituation (S7), in der die zweite Fehlersituation (S3) und die dritte Fehlersituation (S4) in Abwesenheit der ersten Fehlersituation (S2) gleichzeitig auftreten, mit der zweiten Fehlerprozedur (E2) und der vierten Fehlerprozedur (E3).

2. Blattwinkelantrieb nach Anspruch 1, wobei die dritte Fehlerprozedur (E4) für dieselbe Blattwinkelantriebseinheit (9a, 9b, 9c) zumindest eines von Unterbrechen der Stromzufuhr zum Blattwinkelmotor (93a, 93b, 93c), Blockieren des Steuersignals für den Blattwinkelmotor (93a, 93b, 93c), Einlegen einer Bremse zum Blockieren der Bewegung des Rotorblatts (6a, 6b, 6c), Anfordern, dass zumindest eine zweite Blattwinkelantriebseinheit (93b, 93c, 93a) eine neutrale Position einnimmt, umfasst.

3. Blattwinkelantrieb nach Anspruch 1 oder 2, wobei, sobald sich der Blattwinkelantrieb in der Fehlersituation befindet, in der die erste Fehlersituation (S2) und die zweite Fehlersituation (S3) gleichzeitig aufgetreten sind, die Fehlersituation (S2, S3) aufrechterhalten wird, obwohl die erste Fehlersituation (S2) oder die zweite Fehlersituation (S3) verschwunden ist.

4. Blattwinkelantrieb nach einem der vorhergehenden Ansprüche, wobei die erste Fehlerprozedur Umschalten des Blattwinkelantriebsmotors (93a, 93b, 93c) in einen Selbsterfassungsmodus umfasst, in dem die Blattwinkelantriebseinheit (9a, 9b, 9c) ihre Geschwindigkeit durch Erfassen ihrer eigenen Stromversorgung steuert.

5. Blattwinkelantrieb nach einem der vorhergehenden Ansprüche, wobei die zweite Fehlerprozedur (E2) Berechnen einer Position des ersten Rotorblatts (6a) basierend auf Daten, die vom Drehmelder der ersten Blattwinkelantriebseinheit (9a) empfangen werden, umfasst.

6. Blattwinkel nach einem der vorhergehenden Ansprüche, wobei die vierte Fehlerprozedur (E3) Drehen des Rotorblatts (6a, 6b, 6c) in eine neutrale Position umfasst.

7. Blattwinkelantrieb nach Anspruch 6, wobei die vierte Fehlerprozedur (3) Ausüben einer Beschränkung auf den Blattwinkelantrieb der Windturbine umfasst.

8. Blattwinkelantrieb nach Anspruch 7, wobei Ausüben der Beschränkung eine Geschwindigkeitsbeschränkung oder eine Beschleunigungsbeschränkung umfasst.

9. Blattwinkelantrieb nach einem der vorhergehenden Ansprüche, wobei die Blattwinkelantriebssteuerung (9) dazu geeignet ist, selbst wenn zwei Fehlersituationen der ersten, zweiten und dritten Fehlersituation (S2, S3, S4) gleichzeitig aufzutreten scheinen, eine der zwei oder mehr Fehlersituationen (S2, S3, S4) nach der anderen zu verarbeiten.

10. Windturbine (1), umfassend zumindest einen Blattwinkelantrieb nach einem der vorhergehenden Ansprüche.

11. Verfahren zum Betreiben einer Blattwinkelantriebseinheit (93a, 93b, 93c) einer Windturbine (1), umfassend:
- Untersuchen, ob eine erste Fehlersituation (S2) oder eine zweite Fehlersituation (S3) in der Blattwinkelantriebseinheit (93a, 93b, 93c) auftritt, wobei die erste Fehlersituation (S2) einen Ausfall eines Drehmelders zum Steuern eines Blattwinkelmotors (93a, 93b, 93c) von einer der Blattwinkelantriebseinheiten (9a, 9b, 9c) umfasst;
- Reagieren auf die erste Fehlersituation (S2) in Abwesenheit der zweiten Fehlersituation (S3) mit einer ersten Fehlerprozedur (E1);
- Reagieren auf die zweite Fehlersituation (S3) in Abwesenheit der ersten Fehlersituation (S2) mit einer zweiten Fehlerprozedur (E2); und
- Reagieren auf eine Fehlersituation, in der die erste Fehlersituation (S2) und die zweite Fehlersituation (S3) gleichzeitig auftreten, mit einer dritten Fehlerprozedur (E4), die sich von der ersten Fehlerprozedur und der zweiten Fehlerprozedur unterscheidet,
**dadurch gekennzeichnet,**
**dass** die zweite Fehlersituation (S3) einen Ausfall eines Blattmessgebers zum Messen einer Position eines Rotorblatts (6a, 6b, 6c) der Blattwinkelantriebseinheit (9a, 9b, 9c) umfasst; und
**dass** das Verfahren ferner umfasst:
- Reagieren auf die dritte Fehlersituation (S4) in Abwesenheit der ersten Fehlersituation (S2) und der zweiten Fehlersituation (S3) mit einer vierten Fehlerprozedur (E3), wobei die dritte Fehlersituation (S4) einen Ausfall eines Notfall-Reservestromversorgungssystems für den Blattwinkelantrieb umfasst;
- Reagieren auf eine Fehlersituation (S8), in der die erste Fehlersituation (S2), die zweite Fehlersituation (S3) und die dritte Fehlersituation (S4) gleichzeitig auftreten, mit der dritten Fehlerprozedur (E4);
- Reagieren auf eine Fehlersituation (S6), in der die erste Fehlersituation (S2) und die dritte Fehlersituation (S4) in Abwesenheit der zweiten Fehlersituation (S3) gleichzeitig auftreten, mit der ersten Fehlerprozedur (E1) und der vierten Fehlerprozedur (E3); und
- Reagieren auf eine Fehlersituation (S7), in der die zweite Fehlersituation (S3) und die dritte Fehlersituation (S4) in Abwesenheit der ersten Fehlersituation (S2) gleichzeitig auftreten, mit der zweiten Fehlerprozedur (E2) und der vierten Fehlerprozedur (E3).

12. Verfahren nach Anspruch 11, wobei das Verfahren ferner Reagieren bei der dritten Fehlerprozedur (E4) durch zumindest eines von Blockieren des Steuersignals für den ersten Blattwinkelmotor (93a), Einlegen einer Bremse zum Blockieren der Bewegung des ersten Rotorblatts (6a), Anfordern, dass zumindest eine zweite Blattwinkelantriebseinheit (93b) eine neutrale Position einnimmt, umfasst.

13. Verfahren nach Anspruch 11 oder 12, wobei eine von zwei oder mehr Fehlersituationen der ersten, zweiten und dritten Fehlersituation (S2, S3, S4) eine nach der andere verarbeitet werden, selbst wenn zwei oder mehr Fehlersituationen gleichzeitig aufzutreten scheinen.

## Revendications

1. Moteur à pas variable destiné à faire tourner au moins une pale de rotor (6a, 6b, 6c) d'une éolienne (1), le moteur à pas variable comprenant une commande de moteur à pas variable (9) qui analyse si une première situation d'erreur (S2) ou une deuxième situation d'erreur (S3) se produit dans une unité de moteur à pas variable (9a, 9b, 9c) de la commande de moteur à pas variable (9) et la commande de moteur à pas variable (9) étant apte à réagir :
- à la première situation d'erreur (S2) en l'absence de la deuxième situation d'erreur (S3) et à une troisième situation d'erreur (S4) avec une première procédure d'erreur (E1), la première situation d'erreur (S2) comprenant un échec d'un résolveur pour commander un moteur à pas variable (93a, 93b, 93c) d'une des unités de moteur à pas variable (9a, 9b, 9c) ;
- à la deuxième situation d'erreur (S3) en l'absence de la première situation d'erreur (S2) et de la troisième situation d'erreur (S4), avec une deuxième procédure d'erreur (E2) ;
- à une quatrième situation d'erreur (S5), où la première situation d'erreur (S2) et la deuxième situation d'erreur (S3) se produisent en l'absence de la troisième situation d'erreur (S4) en même temps, avec une troisième procédure d'erreur (E4) qui est différente de la première procédure d'erreur (E1) et de la deuxième procédure d'erreur (E2) ;
**caractérisé en ce que**
la deuxième situation d'erreur (S3) comprend un échec d'un codeur de pale pour mesurer la position d'une pale de rotor (6a, 6b, 6c) de l'unité de moteur à pas variable (9a, 9b, 9c) ;
que la commande de moteur à pas variable (9) est en outre apte à réagir :
- à la troisième situation d'erreur (S4), en l'absence de la première situation d'erreur (S2) et de la deuxième situation d'erreur (S3), avec une quatrième procédure d'erreur (E3), la troisième situation d'erreur (S4) comprenant un échec d'un système de sauvegarde de courant de secours pour le moteur à pas variable ;
- à une situation d'erreur (S8), où la première situation d'erreur (S2), la deuxième situation d'erreur (S3) et la troisième situation d'erreur (S4) se produisent en même temps, avec la troisième procédure d'erreur (E4) ;
- à une situation d'erreur (S6), où la première situation d'erreur (S2) et la troisième situation d'erreur (S4) se produisent en l'absence de la deuxième situation d'erreur (S3) en même temps, avec la première procédure d'erreur (E1) et la quatrième procédure d'erreur (E3), et
- à une situation d'erreur (S7), où la seconde situation d'erreur (S3) et la troisième situation d'erreur (S4) se produisent en l'absence de la première procédure d'erreur (S2) en même temps, avec la deuxième procédure d'erreur (E2) et la quatrième procédure d'erreur (E3).

2. Moteur à pas variable selon la revendication 1, dans lequel la troisième procédure d'erreur (E4) comprend, pour la même unité de moteur à pas variable (9a, 9b, 9c), au moins une action parmi l'interruption de l'alimentation électrique du moteur à pas variable (93a, 93b, 93c), le blocage du signal de commande du moteur à pas variable (93a, 93b, 93c), l'engagement d'un frein pour bloquer le mouvement de la pale de rotor (6a, 6b, 6c), la demande faite à au moins une seconde unité de moteur à pas variable (93b, 93c, 93a) d'atteindre une position neutre.

3. Moteur à pas variable selon la revendication 1 ou 2, dans lequel, une fois que le moteur à pas variable est dans la situation d'erreur où la première situation d'erreur (S2) et la deuxième situation d'erreur (S3) se sont produites en même temps, la situation d'erreur (S2, S3) est maintenue bien que la première situation d'erreur (S2) ou la deuxième situation d'erreur (S3) aient disparu.

4. Moteur à pas variable selon une des revendications précédentes, dans lequel la première procédure d'erreur comprend le passage du moteur à pas variable (93a, 93b, 93c) dans un mode d'auto-détection dans lequel l'unité de moteur à pas variable (9a, 9b, 9c) contrôle sa vitesse en détectant sa propre alimentation en courant.

5. Moteur à pas variable selon une des revendications précédentes, dans lequel la deuxième procédure d'erreur (E2) comprend le calcul d'une position de la première pale de rotor (6a) en se basant sur des données reçues de la part du résolveur de la première unité de moteur à pas variable (9a).

6. Moteur à pas variable selon une des revendications précédentes, dans lequel la quatrième procédure d'erreur (E3) comprend la rotation de la pale de rotor (6a, 6b, 6c) dans une position neutre.

7. Moteur à pas variable selon la revendication 6, dans lequel la quatrième procédure d'erreur (3) comprend l'application d'une limite au moteur à pas variable de la turbine d'éolienne.

8. Moteur à pas variable selon la revendication 7, dans lequel l'application de la limite comprend une limite de vitesse ou une limite d'accélération.

9. Moteur à pas variable selon une des revendications précédentes, dans lequel la commande de moteur à pas variable (9) est apte, même si deux situations d'erreur parmi les première, deuxième et troisième situations d'erreur (S3, S3, S4) semblent apparaître en même temps, à traiter une des deux situations d'erreur ou plus (S3, S3, S4) l'une après l'autre.

10. Turbine d'éolienne (1) comprenant au moins un moteur à pas variable selon une des revendications précédentes

11. Procédé d'actionnement d'une unité de moteur à pas variable (93a, 93b, 93c) d'une turbine d'éolienne (1) comprenant :
- le fait d'analyser si une première situation d'erreur (S2) ou une deuxième situation d'erreur (S3) se produit dans l'unité de moteur à pas variable (9a, 9b, 9c), la première situation d'erreur (S2) comprenant un échec d'un résolveur pour commander un moteur à pas variable (93a, 93b, 93c) d'une des unités de moteur à pas variable (9a, 9b, 9c) ;
- le fait de réagir à la première situation d'erreur (S2) en l'absence de la deuxième seconde situation d'erreur (S3) avec une première procédure d'erreur (E1) ;
- le fait de réagir à la deuxième situation d'erreur (S3), en l'absence de la première situation d'erreur (2), avec une deuxième procédure d'erreur (E2) ; et
- le fait de réagir à une situation d'erreur, où la première situation d'erreur (S2) et la deuxième situation d'erreur (S3) se produisent en même temps, avec une troisième procédure d'erreur (E4) qui est différente de la première procédure d'erreur et de la deuxième procédure d'erreur,
**caractérisé en ce que**
la deuxième situation d'erreur (S3) comprend un échec d'un codeur de pale pour mesurer la position d'une pale de rotor (6a, 6b, 6c) de l'unité de moteur à pas variable (9a, 9b, 9c) ; et
que ledit procédé comprend en outre :
- la réaction à la troisième situation d'erreur (S4), en l'absence de la première situation d'erreur (S2) et de la deuxième situation d'erreur (S3), avec une quatrième procédure d'erreur (E3), la troisième situation d'erreur (S4) comprenant un échec d'un système de sauvegarde de courant de secours pour le moteur à pas variable ;
- la réaction à une situation d'erreur (S8), où la première situation d'erreur (S2), la deuxième situation d'erreur (S3) et la troisième situation d'erreur (S4) se produisent en même temps, avec la troisième procédure d'erreur (E4) ;
- la réaction à une situation d'erreur (S6), où la première situation d'erreur (S2) et la troisième situation d'erreur (S4) se produisent en l'absence de la deuxième situation d'erreur (S3) en même temps, avec la première procédure d'erreur (E1) et la quatrième procédure d'erreur (E3) ; et
- à une situation d'erreur (S7), où la deuxième situation d'erreur (S3) et la troisième situation d'erreur (S4) se produisent en l'absence de la première situation d'erreur (S2) en même temps, avec la deuxième procédure d'erreur (E2) et la quatrième procédure d'erreur (E3).

12. Procédé selon la revendication 11, ledit procédé comprenant en outre le fait de réagir dans la troisième procédure d'erreur (E4) par au moins une action parmi le blocage du signal de commande pour le premier moteur à pas variable (93a), l'engagement d'un frein pour bloquer le mouvement de la première page de rotor (6a), la demande faite à un second moteur à pas variable (93b) d'atteindre une position neutre.

13. Procédé selon la revendication 11 ou 12, dans lequel une de deux situations d'erreur ou plus parmi les première, deuxième et troisième situations d'erreur (S2, S3, S4) est traitée successivement même si deux situations d'erreur ou plus semblent apparaître en même temps.
